# FASCICULE DE BREVET EUROPEEN

(11) **EP 1 456 555 B1**
(45) Date de publication et mention de la délivrance du brevet: **12.07.2006**
(21) Numéro de dépôt: 02796913.8
(22) Date de dépôt: 13.12.2002
(51) Int. Cl.: F16D 65/21, F16D 65/38, B60T 13/74

(54) **FREIN ELECTROMECANIQUE ET PROCEDE DE COMMANDE DE CELUI-CI**
ELEKTROMECHANISCHE BREMSANLAGE UND VERFAHREN ZU DEREN STEUERUNG
ELECTROMECHANICAL BRAKE AND METHOD FOR CONTROLLING SAME

(30) Priorité: 20.12.2001 GB 0130379
(43) Date de publication de la demande: 15.09.2004
(73) Titulaire: Delphi Technologies, Inc., Troy, MI 48007 (US)
(72) Inventeur: ALVAREZ, Belen, F-75015 Paris (FR); LONGUEMARE, Pierre, F-75012 Paris (FR); HECK, Thomas, Worthington, F-60128 Plailly (FR)
(74) Mandataire: Laget, Jean-Loup
(86) Numéro de dépôt international: PCT/FR2002/004352
(87) Numéro de publication internationale: WO 2003/054412

(56) Documents cités:
- WO-A-99/02882
- DE-A- 19 910 048
- US-A- 5 915 504
- US-A- 6 012 556
- US-B1- 6 279 694

## Description

La présente invention concerne un frein électromécanique et, en particulier, la conunande du fonctionnement d'un frein électromécanique.

Des freins électromécaniques sont en cours de développement. Dans un frein électromécanique, au lieu d'utiliser un étrier hydraulique traditionnel pour accomplir une fonction de freinage, on utilise un étrier dans lequel la force de serrage est engendrée par voie électromécanique. L'étrier électromécanique consiste en un moteur et en un mécanisme de réduction qui convertit le couple et le mouvement de rotation du moteur en une force et un mouvement de translation des plaquettes de frein.

Dans les étriers hydrauliques, les plaquettes de frein sont écartées du disque de frein de façon naturelle (grâce à la conception mécanique du joint de piston), lorsque la pression est réduite à zéro, c'est-à-dire lorsque la pédale de frein est relâchée. Ce mouvement assure un faible couple résiduel de freinage. Plus l'écart entre le disque et les plaquettes de frein est grand, plus le couple résiduel de freinage est faible. Toutefois, ceci dégrade le temps de réponse du frein quand celui-ci est actionné, car le piston doit alors parcourir une plus grande course pour engendrer une pression, et, de façon plus importante, cela dégrade la sensation à la pédale ressentit par le conducteur (le conducteur doit enfoncer davantage la pédale de frein pour que la pression de freinage s'établisse).

Le problème qui se pose avec les freins électromécaniques est qu'il est difficile de faire reculer le piston de façon naturelle, à cause de l'inertie et des frottements qui existent dans un frein électromécanique. Des contraintes de conception courantes exigent que le piston soit reculé d'une manière contrôlée. De façon idéale, le piston devrait toujours être reculé jusque dans une position fixe par rapport au disque. Là encore, un recul du piston trop loin en arrière affecte défavorablement le temps de réponse, mais n'affecte pas la sensation à la pédale étant donné que, dans un frein électromécanique, l'étrier électromécanique et la pédale de frein sont mécaniquement désaccouplés. Il n'en reste pas moins que, de même que pour un frein hydraulique, il est souhaitable que dans un frein électromécanique le temps de réponse soit maintenu aussi faible que possible, tout en ayant un couple résiduel de freinage aussi faible que possible dans la position de repos du frein.

La présente invention a donc pour but de résoudre ce problème.

A cet effet, l'invention fournit un procédé pour commander, dans un système de frein à disque d'un véhicule, un étrier électromécanique comportant deux plaquettes de frein placées respectivement de part et d'autre d'un disque de frein lié à une roue du véhicule, un moteur électrique rotatif, un capteur de position angulaire apte à mesurer un angle instantané de rotation dudit moteur électrique, un mécanisme de réduction de vitesse et de conversion relié fonctionnellement d'une part au moteur électrique et d'autre part à un piston portant une des deux plaquettes de frein, ledit mécanisme étant apte à convertir le mouvement de rotation du moteur électrique en un mouvement de translation dudit piston et de la plaquette de frein y associée vers ou à l'écart du disque de frein selon le sens de rotation du moteur électrique, et des moyens de détection de force aptes à détecter au moins une valeur de force de serrage exercée par ledit étrier électromécanique sur lesdites plaquettes de frein, caractérisé en ce qu'il comprend les étapes consistant :
a) à déterminer une position de contact plaquettes/disque de frein ;
b) à chaque phase de desserrage du frein à disque :
   b1) à commander le moteur électrique de façon à faire reculer le piston à l'écart du disque de frein jusqu'à une première position cible écartée de la position de contact déterminée à l'étape a) d'une première quantité prédéfinie telle que ledit étrier électromécanique n'exerce sensiblement aucune force de serrage sur lesdites plaquettes de frein ;
   b2) à commander ensuite le moteur électrique de façon à faire avancer le piston à partir de la première position cible vers le disque de frein jusqu'à une seconde position cible écartée de ladite position de contact déterminée à l'étape a) d'une seconde quantité prédéfinie, plus petite que ladite première quantité prédéfinie, ladite seconde position cible étant une position d'attente pour un cycle suivant de serrage/desserrage du frein à disque, ladite seconde quantité prédéfinie étant choisie de façon à obtenir un couple résiduel de freinage minimal à la fin de la phase de desserrage en cours et un temps de réponse minimal du frein à disque pour le cycle suivant de serrage/ desserrage.

Selon la conception de l'étrier, différentes informations de capteur peuvent être utilisées pour ramener le piston dans sa position de repos. Les capteurs peuvent inclure un capteur de force de serrage, un capteur de position du moteur (ou de position de plaquettes de frein), un capteur de courant du moteur, des commutateurs à contact, etc.

Pour la mise en oeuvre de la présente invention, deux capteurs sont nécessaires :
- un capteur de position du moteur à titre de capteur de position angulaire (relative ou absolue) apte à mesurer un angle instantané de rotation du rotor du moteur ;
- un capteur de force apte à mesurer la force instantanée de serrage exercée par l'étrier de frein et à fournir un signal électrique indicatif de la force instantanée de serrage, ou un commutateur apte à commuter (changer d'état) pour une force discrète donnée de serrage, à titre de moyens de détection aptes à détecter au moins une valeur de force de serrage.

La position angulaire du rotor du moteur peut être utilisée pour déterminer le déplacement et la position des plaquettes de frein étant donné que la position angulaire du rotor et la position des plaquettes de frein sont directement liées l'une à l'autre par le mécanisme de réduction et de conversion. La force instantanée de serrage (ou la force discrète donnée de serrage) peut être utilisée pour déterminer si les plaquettes de frein sont ou non en contact avec le disque de frein.

Ainsi, la détermination de la position de contact plaquettes/disque de frein peut être effectuée à partir des signaux de sortie fournis par le capteur de position angulaire et par les moyens de détection de force.

De préférence, ladite position de contact est déterminée comme étant la valeur mesurée de l'angle instantané de rotation fournie par le capteur de position angulaire quand la force de serrage détectée par lesdits moyens de détection a une valeur prédéfinie.

De préférence, ladite première quantité prédéfinie est la somme d'une première valeur d'angle de rotation qui est obtenue par extrapolation de la courbe caractéristique force de serrage/position angulaire du moteur de l'étrier électromécanique et qui donne une force de serrage sensiblement nulle, et d'une seconde valeur d'angle de rotation qui, additionnée à ladite première valeur d'angle de rotation, donne de façon certaine une force de serrage nulle.

De préférence, ladite seconde quantité prédéfinie est la somme de ladite première valeur d'angle de rotation et d'une troisième valeur d'angle de rotation, plus petite que la seconde valeur d'angle de rotation et choisie de façon à obtenir un couple résiduel de freinage dont la valeur est comprise dans une plage correspondant à un coude de la caractéristique couple résiduel/jeu du piston de l'étrier électromécanique.

De préférence, l'étape a) est effectuée à chaque phase de desserrage du frein à disque.

De préférence, l'étape b) est effectuée dans un temps t inférieur à un temps minimal entre relâchement de la pédale de frein et appui suivant sur la pédale de frein. Par exemple, le temps t est inférieur à 0,5 s.

De préférence, après l'étape b1) et avant l'étape b2), on maintient le moteur électrique dans la première position cible pendant une durée t' suffisante pour permettre une mise à jour de paramètres de fonctionnement du système de freinage. Par exemple, la durée t' est d'environ 300 ms.

L'invention a également pour objet un système de frein à disque pour un véhicule, comprenant un disque de frein, un étrier électromécanique et un calculateur programmé pour contrôler et commander le fonctionnement de l'étrier électromécanique, ce dernier comportant deux plaquettes de frein, placées respectivement de part et d'autre du disque de frein lié à une roue du véhicule, un moteur électrique rotatif, un capteur de position angulaire apte à mesurer un angle instantané de rotation dudit moteur électrique, un mécanisme de réduction de vitesse et de conversion relié fonctionnellement d'une part au moteur électrique et d'autre part à un piston portant une des deux plaquettes de frein, ledit mécanisme étant apte à convertir le mouvement de rotation du moteur électrique en un mouvement de translation dudit piston et de la plaquette de frein y associée vers ou à l'écart du disque de frein selon le sens de rotation du moteur électrique, et des moyens de détection de force aptes à détecter au moins une valeur de force de serrage exercée par ledit étrier électromécanique sur lesdites plaquettes de frein, caractérisé en ce que ledit calculateur programmé comprend :
a) des moyens pour déterminer une position de contact plaquettes/disque de frein ; et
b) des moyens pour commander le moteur électrique de façon à faire reculer le piston à l'écart du disque de frein jusqu'à une première position cible écartée de ladite position de contact d'une première quantité prédéfinie telle que ledit étrier électromécanique n'exerce sensiblement aucune force de serrage sur lesdites plaquettes de frein, et pour commander ensuite le moteur électrique de façon à faire avancer le piston à partir de la première position cible vers le disque de frein jusqu'à une seconde position cible écartée de ladite position de contact d'une seconde quantité prédéfinie, plus petite que ladite première quantité prédéfinie, ladite seconde position cible étant une position d'attente pour un cycle suivant de serrage/desserrage du frein à disque, ladite seconde quantité prédéfinie étant choisie de façon à obtenir un couple résiduel de freinage minimal pour la phase de desserrage en cours et un temps de réponse minimal du frein à disque pour le cycle suivant de serrage/desserrage.

L'invention sera mieux comprise, et d'autres buts, détails, caractéristiques et avantages de celle-ci apparaîtront plus clairement au cours de la description suivante d'un mode de réalisation particulier de l'invention, donné uniquement à titre illustratif et non limitatif, en référence aux dessins annexés sur lesquels :
- la figure 1 est une vue générale schématique d'un système de freinage comportant des étriers électromécaniques, dans lequel la présente invention peut être mise en oeuvre ;
- la figure 2 est une vue en coupe d'un étrier électromécanique de type connu, utilisable dans le système de freinage de la figure 1 ;
- la figure 3 est un graphique permettant d'expliquer le fonctionnement de l'étrier électromécanique du système de freinage selon l'invention, le graphique montrant un diagramme temporel illustrant l'évolution de la position angulaire instantanée du rotor du moteur et l'évolution corrélative de la force de serrage au cours d'un cycle de serrage/desserrage d'un frein à disque du système de freinage ;
- la figure 4 est un graphique montrant la caractéristique force de serrage/position angulaire du moteur de l'étrier électromécanique utilisé dans le système de freinage selon l'invention ;
- la figure 5 est un graphique montrant la caractéristique couple résiduel/jeu du piston de l'étrier électromécanique ;
- la figure 6 est un organigramme représentant un algorithme utilisable dans le procédé de commande selon l'invention.

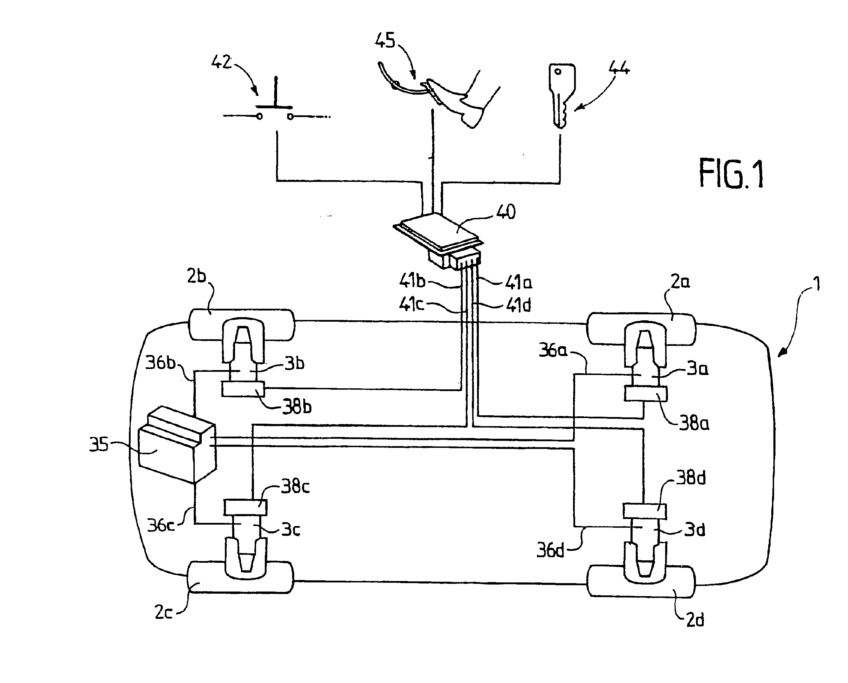

En se reportant à la figure 1, on peut voir un véhicule 1 et son système de freinage qui sont représentés de manière très schématique. Le véhicule 1 comporte, sur chacune de ses roues 2a-2d, un étrier électromécanique 3a-3d. Chacun des étriers électromécaniques 3a-3d est alimenté en courant électrique par une batterie 35 via des circuits d'alimentation respectifs schématiquement représentés par les câbles électriques 36a-36d. La batterie 35 est apte à délivrer, par exemple, un courant dont la tension est de 42 V et l'intensité peut varier entre 0 et 14 A. L'activation de chacun des étriers électromécaniques 3a-3d est contrôlée et commandée électroniquement par un calculateur de freinage. L'architecture d'une telle électronique de contrôle et de commande du freinage comporte, de préférence, un calculateur central 40 et des calculateurs déportés 38a-38d placés à proximité de chacun des étriers électromécaniques 3a-3d et reliés audit calculateur central 40 par des connections, par exemple un réseau utilisant le protocole CANBus, schématiquement représentées par les liaisons 41a-41d. Le calculateur central 40 peut, par exemple, exécuter des programmes généraux tels que le contrôle dynamique de stabilité (ESP), l'antiblocage des roues (ABS) ou l'équivalent. Le calculateur de freinage peut également, par l'intermédiaire de différents capteurs, détecter certaines actions du conducteur du véhicule 1. Un capteur 42 permet de détecter l'utilisation du frein de parking. Un détecteur 44 permet de détecter l'insertion de la clé de contact et la mise en marche du véhicule 1 (ou l'inverse). Un détecteur 45 permet de détecter une pression du conducteur sur la pédale de frein. Le calculateur central 40 émet sélectivement des signaux sur les liaisons 41a-41d. Ces signaux correspondent à une force de freinage demandée ou force de serrage cible. Si le signal est émis sur la liaison 41a, par exemple, le calculateur déporté 38a est apte à lire ledit signal et apte à piloter l'étrier électromécanique 3a de manière à ce que la force de freinage finalement appliquée à la roue 2a corresponde à la force de serrage cible demandée.

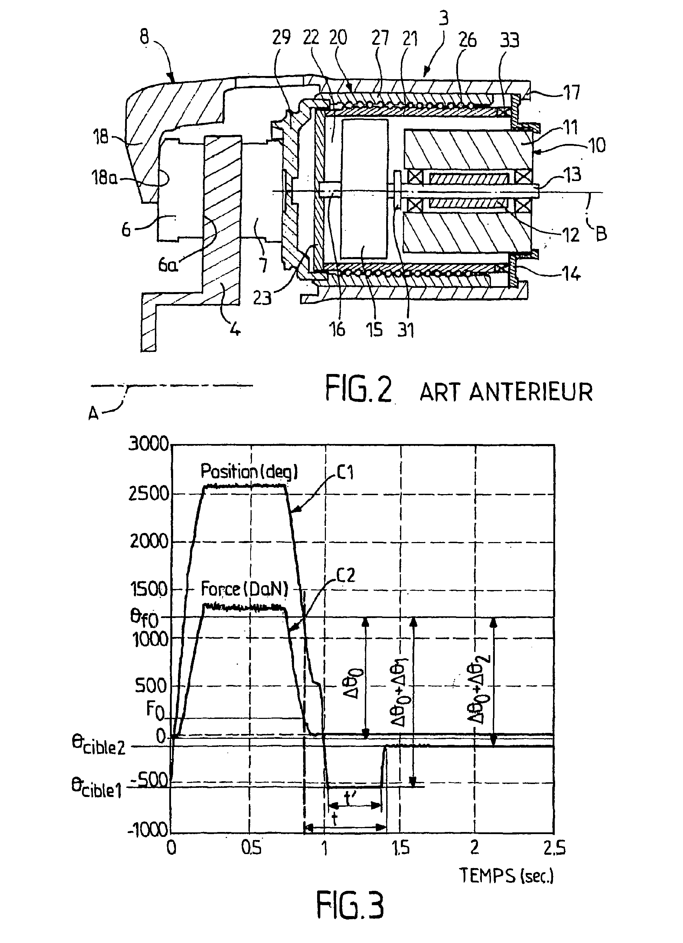

La figure 2 représente un étrier électromécanique 3, de type connu, utilisable dans le système de freinage du véhicule 1 de la figure 1. La partie gauche de la figure 2 correspond au côté de l'étrier électromécanique 3 placé en regard de la roue. Nous parlerons du côté roue par opposition au côté carrosserie. L'axe A représente l'axe de la roue. L'étrier électromécanique 3 comporte un boîtier 8 à l'intérieur duquel est logé un moteur électrique 10, une vis à billes 20 et des plaquettes de frein externe 6 et interne 7 disposées de part et d'autre d'un disque de frein 4 lié à une roue (non montrée) du véhicule.

Le boîtier 8 comporte, côté roue, une griffe 18 faite d'une seule pièce avec le boîtier 8 et ayant une surface interne 18a contre laquelle la plaquette de frein externe 6 est fixée. Le boîtier 8 comporte, côté carrosserie, un épaulement 17. Un élément de maintien 14 placé sur ledit épaulement 17 du boîtier 8 et comportant un moyen de fixation du moteur électrique 10 permet de solidariser le moteur électrique 10 au boîtier 8.

Le moteur électrique utilisé dans un étrier électromécanique peut être n'importe quel moteur à courant continu. Sur la figure 2, le moteur électrique 10 est un moteur à aimant permanent. Le moteur électrique 10 comporte un stator bobiné 11 et un rotor 12, constitué d'un aimant permanent et apte à tourner autour de l'axe B lorsqu'une puissance électrique est fournie aux enroulements du stator 11. Le moteur électrique 10 comporte un arbre moteur 13 solidaire du rotor 12. Lorsque ce dernier est mis en mouvement, il transmet son mouvement de rotation à l'arbre moteur 13.

Afin de piloter le fonctionnement du moteur électrique 10 à aimant permanent, un capteur de position angulaire 31 est positionné sur l'arbre moteur 13 en sortie du moteur électrique 10. Ce capteur permet de mesurer l'angle instantané de rotation de l'arbre moteur 13 et donc du rotor 12, par rapport au stator 11. Le capteur de position angulaire 31 est typiquement, par exemple, un capteur à effet Hall.

En sortie du moteur électrique 10, l'arbre moteur 13 est couplé avec une boîte de réduction 15 possédant un arbre de sortie 16. La boîte de réduction 15 permet d'obtenir un rapport entre la vitesse de rotation de l'arbre moteur 13 et la vitesse de rotation de l'arbre de sortie 16 typiquement de 30 pour 1. Pour une rotation d'un angle de rotation donné de l'arbre moteur 13, l'arbre de sortie 16 tournera d'un angle de rotation 30 fois plus faible. En revanche, l'intensité du couple disponible sur l'arbre de sortie 16 est 30 fois plus important que le couple fourni par l'arbre moteur 13.

La vis à billes 20 est couplée à l'arbre de sortie 16. Cette vis à billes 20 comporte une partie vis 21, des billes 26 et une partie écrou 27. La partie vis 21 est de forme cylindrique creuse d'axe B et comporte un alésage 22 dans lequel est logé le moteur électrique 10 et la boîte de réduction 15. La partie vis 21 est liée à l'arbre de sortie 16 par l'intermédiaire d'un flasque 23. La rotation de l'arbre de sortie 16 est ainsi transmise à la partie vis 21 de la vis à billes 20.

La surface extérieure de la partie vis 21 et la surface intérieure de la partie écrou 27 sont filetées de manière à définir entre elles un canal hélicoïdal apte à recevoir les billes 26. La partie écrou 27 est guidée dans le boîtier 8 par des moyens de guidage (non montrés) de telle sorte qu'elle puisse se déplacer seulement en translation, parallèlement à l'axe B. Cet agencement permet à la partie vis 21 animée d'un mouvement de rotation par rapport au boîtier 8 d'entraîner la partie écrou 27 dans un mouvement de translation selon l'axe B par rapport au boîtier 8.

Du côté roue, la partie écrou 27 est liée à un piston 29 qui porte la plaquette de frein interne 7.

Lorsque la partie écrou 27 est animée d'un mouvement de translation vers le côté roue, la plaquette de frein interne 7 se rapproche de la plaquette de frein externe 6, et le disque de frein 4 placé entre lesdites plaquettes 6 et 7 est pressé et subit une force de serrage. Le disque 4 étant solidaire de la roue 2 (figure 1), la force de serrage entraîne un frottement qui a pour conséquence de ralentir le mouvement de rotation de la roue 2 autour de l'axe de rotation A et donc de freiner le véhicule. La force de serrage maximale peut être de l'ordre de la tonne.

Afin de connaître la force de serrage appliquée par les plaquettes de frein 6 et 7, l'étrier électromécanique 3 est en outre muni d'un capteur de force de serrage 33 placé entre la partie vis 21 et l'élément de maintien 14. Ce capteur de force de serrage 33 peut être par exemple un capteur piézoélectrique qui, en se déformant sous l'effet d'un contrainte extérieure, émet un signal électrique corrélé à l'intensité de ladite contrainte.

En se reportant maintenant au graphique de la figure 3, les deux diagrammes représentent des évolutions concomitantes de la position angulaire ou angle instantané de rotation du moteur (courbe C1) et de la force résultante instantanée de serrage (courbe C2) au cours d'un cycle typique de serrage/desserrage de l'un quelconque des étriers électromécaniques 3a-3d du système de freinage du véhicule 1 de la figure 1, par exemple l'étrier 3a associé à la roue 2a du véhicule 1. Au cours du cycle de serrage/desserrage, le calculateur 38a détermine une position de contact, c'est-à-dire la position angulaire instantanée θ_{f0} du rotor 12 du moteur électrique 10 de l'étrier électromécanique 3a correspondant à un contact entre les plaquettes de frein 6 et 7 et le disque de frein 4. La position de contact θ_{f0} déterminée par le calculateur 38a va ensuite servir de position de référence dans la phase de desserrage du frein à disque pour commander le moteur électrique 10 et ramener le piston 29 de l'étrier électromécanique dans une position de repos, en attente du cycle de serrage/desserrage suivant.

Comme montré dans la figure 3, la phase de desserrage du cycle de serrage/desserrage est effectuée en deux temps. Dans un premier temps, le calculateur 38a commande le moteur électrique 10 de l'étrier électromécanique 3a de façon à faire reculer le plus rapidement possible le piston 29 à l'écart du disque de frein 4 jusqu'à une première position cible correspondant à une première position angulaire cible θ_{cible 1} du rotor du moteur électrique 10, qui est écartée d'une première quantité prédifinie (Δθ₀ + Δθ₁) par rapport à la position de contact ou position de référence θ_{f0} déterminée précédemment. La première quantité prédéfinie est choisie de telle manière que, dans la première position cible θ_{cible 1}, l'étrier électromécanique 3 n'exerce, de manière certaine, aucune force de serrage sur les plaquettes de frein 6 et 7. La première quantité prédéfinie est déterminée d'une manière qui sera décrite en détail plus loin. Dans un deuxième temps, le calculateur 38a commande le moteur électrique 10 de façon à faire avancer le piston 29 à partir de la première position cible jusqu'à une seconde position cible correspondant à une seconde position angulaire cible θ_{cible 2} du rotor du moteur électrique, qui est écartée de la position de contact ou position de référence θ_{f0} d'une seconde quantité prédéfinie (Δθ₀ + Δθ₂) plus petite que la première quantité prédéfinie (Δθ₂ < Δθ₁). La seconde position cible est la position de repos ou position d'attente du frein à disque pour un cycle suivant de serrage/desserrage. La seconde quantité prédéfinie est choisie de façon à obtenir, dans la position de repos du frein à disque, un couple résiduel de freinage minimal à la fin de la phase de desserrage en cours et un temps de réponse minimal du frein à disque pour le cycle suivant de serrage/desserrage. La seconde quantité prédéfinie est déterminée d'une façon qui sera décrite en détail plus loin.

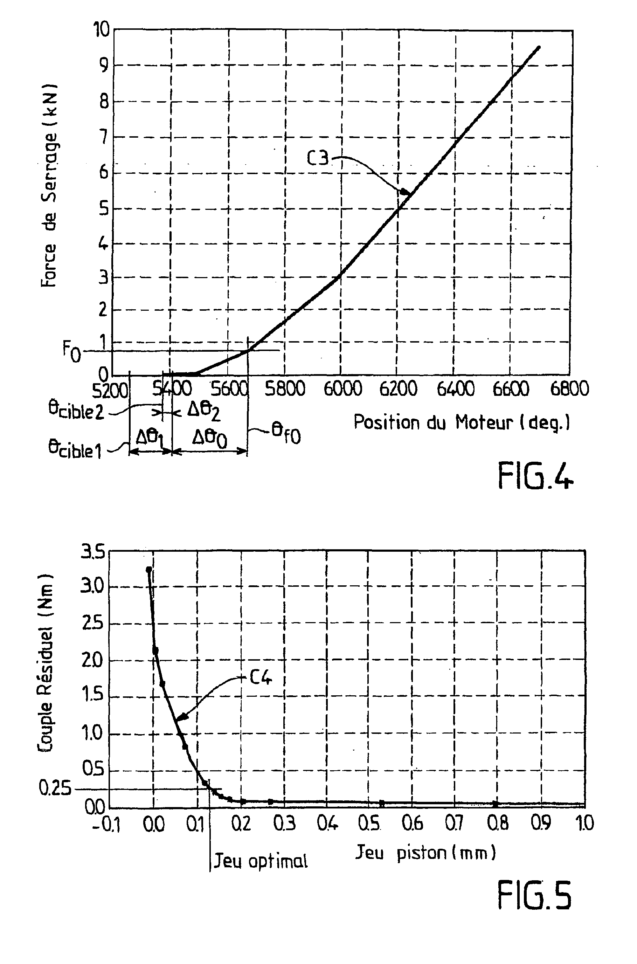

En se reportant maintenant au graphique de la figure 4, la courbe C3 est une courbe caractéristique typique force de serrage/position angulaire du moteur d'un étrier électromécanique tel que par exemple l'étrier électromécanique 3 montré dans la figure 2. Comme on peut le voir dans la figure 4, pour les faibles valeurs de la force de serrage, la courbe C3 s'étend presque parallèlement à l'axe des abscisses. En conséquence, il est très difficile de déterminer avec précision la position angulaire du rotor du moteur pour laquelle un contact est établi (ou rompu) entre le disque de frein et les plaquettes de frein, et qui correspond au moment où la force de serrage commence à s'établir (ou s'annule). Cette difficulté est due à plusieurs causes, notamment au fait que les étriers sont habituellement montés flottants dans une direction parallèle à l'axe A (figure 2) par rapport au disque de frein 4. Il en résulte que, en service, de faux contacts peuvent se produire entre les plaquettes de frein 6 et 7 et le disque de frein 4, l'une des deux plaquettes de frein pouvant entrer en contact avec le disque 4 avant l'autre plaquette de frein au début de la phase de serrage d'un cycle de serrage/desserrage du frein à disque.

La position de contact ou position de référence n'est donc pas déterminée comme étant la position correspondant à une valeur nulle de la force de serrage, mais de préférence comme étant la valeur mesurée de l'angle instantané de rotation θ_{f0} fournie par le capteur de position angulaire 31 quand la force de serrage mesurée par le capteur de force 33 a une valeur prédéfinie F₀, faible mais non nulle, par exemple 60 DaN. Dans la figure 4, de même que dans la figure 3, la valeur représentée de F₀ a été volontairement exagérée pour la clarté de ces deux figures.

Ayant ainsi déterminé la position de contact ou position de référence θ_{f0}, on peut, en extrapolant la courbe caractéristique C3 de l'étrier électromécanique, déterminer une première valeur d'angle de rotation Δθ₀, qui donne une force de serrage sensiblement nulle, et une seconde valeur d'angle de rotation Δθ₁ qui, additionnée à la première valeur Δθ₀, donne de façon certaine une force de serrage nulle. Les deux valeurs Δθ₀ et Δθ₁ sont des valeurs fixes paramétrables qui sont stockées par exemple dans une mémoire du calculateur 38a associé à l'étrier électromécanique 3a, et qui vont permettre ainsi au calculateur 38a de déterminer à chaque cycle de serrage/desserrage du frein à disque correspondant la première position cible θ_{cible 1} à partir de la position de référence θ_{f0}. Cette position de référence θ_{f0} est elle aussi stockée dans la mémoire du calculateur 38a, mais elle est de préférence mise à jour comme on le verra plus loin, car elle dépend du degré d'usure des plaquettes de frein 6 et 7. La détermination et la mise à jour de θ_{f0} peuvent être effectuées par exemple chaque fois que le moteur du véhicule est démarré (au cours d'un test des freins effectué à cette occasion) ou, lorsque le véhicule est en marche, tous les n cycles de serrage/desserrage (n étant un nombre entier prédéfini) ou de préférence à chaque cycle de serrage/desserrage des freins à disque du véhicule. De préférence, la détermination et la mise à jour de la position de référence θ_{f0} sont effectuées pendant la phase de desserrage (partie descendante des courbes C1 et C2 de la figure 3) de chaque cycle de serrage/desserrage des freins à disque du véhicule, car il est ainsi possible de prendre en compte l'usure des plaquettes de frein qui est intervenue pendant le cycle de serrage/desserrage en cours, pour le calcul des positions cibles θ_{cible 1} et θ_{cible 2} de la phase de desserrage en cours.

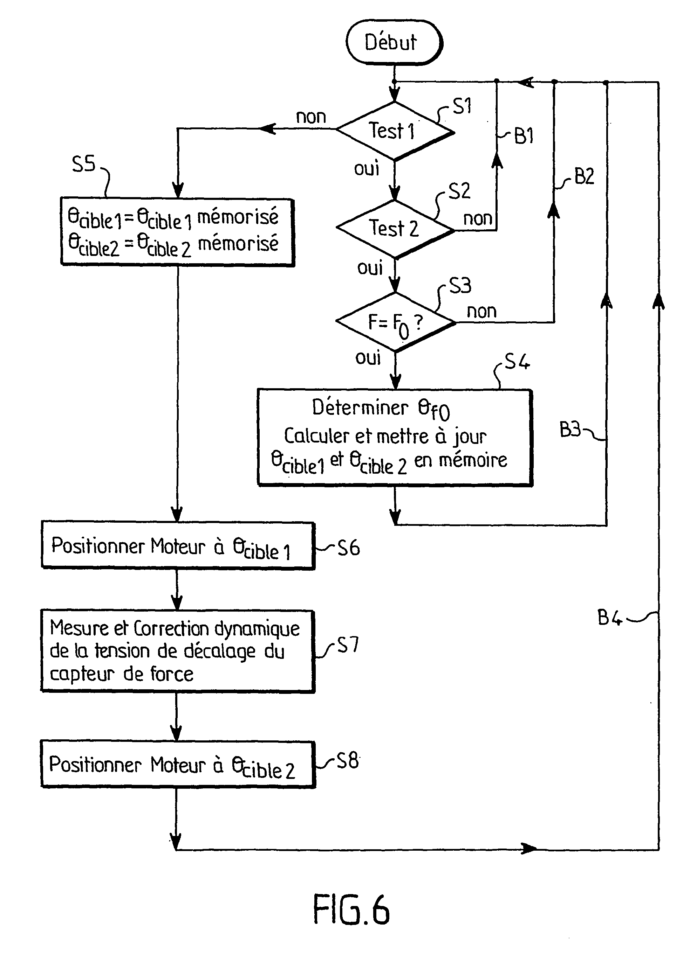

On va maintenant indiquer comment la troisième valeur d'angle de rotation susmentionnée Δθ₂ est déterminée. En se reportant au graphique de la figure 5, la courbe C4 est une courbe caractéristique couple résiduel de freinage/jeu du piston d'un étrier électromécanique tel que l'étrier 3 de la figure 2. Comme indiqué plus haut, il est souhaitable que, dans la position de repos ou d'attente de l'étrier de frein, c'est-à-dire dans la position correspondant à la seconde position θ_{cible 2}, le jeu du piston (jeu total des deux plaquettes de frein par rapport au disque de frein) soit tel que, d'une part, le couple résiduel de freinage soit le plus faible possible et que, d'autre part, le temps de réponse du frein soit également le plus faible possible. Or, d'après la courbe caractéristique C4 de la figure 5, il est clair que si le jeu du piston est très faible, par exemple inférieur à 0,1 mm, le temps de réponse du frein sera très court, mais une faible variation du jeu du piston va entraîner une forte variation du couple résiduel de freinage. Dans ces conditions, comme le jeu ou le déplacement du piston est proportionnel à l'angle de rotation du rotor du moteur, toute erreur de position angulaire du rotor du moteur peut entraîner une forte variation du couple résiduel de freinage.

D'un autre côté, si, dans la seconde position cible, le jeu du piston est relativement important, par exemple supérieur à 0,2 mm, une variation relativement grande du jeu du piston et, par suite, une erreur de position angulaire du rotor du moteur dans la seconde position cible n'entraîneront qu'une variation très faible du couple résiduel de freinage, mais le temps de réponse du frein sera d'autant plus grand que le jeu du piston est grand. Un bon compromis consiste à choisir la troisième valeur d'angle de rotation Δθ₂ de façon à obtenir, dans la seconde position cible, un couple résiduel de freinage dont la valeur est comprise dans une plage correspondant au coude de la courbe caractéristique couple résiduel/jeu du piston de l'étrier électromécanique. Dans l'exemple représenté sur la figure 5 pour un étrier électromécanique donné, le coude de la courbe caractéristique C4 correspond à un jeu du piston dont la valeur est comprise dans une plage d'environ 0,1 à 0,2 mm, plage qui correspond elle-même à une plage de valeurs de couple résiduel comprise entre environ 0,5 et 0,1 Nm.

Ainsi, en utilisant un banc d'essais pour déterminer, pour un étrier donné, la position de référence θ_{f0} et la première valeur d'angle de rotation Δθ₀ de la manière décrite plus haut, il est possible d'obtenir une valeur de la position angulaire du rotor du moteur correspondant à (θ_{f0} - Δθ₀). Ensuite, en relevant sur le même banc d'essais la position angulaire du rotor du moteur qui donne un couple résiduel de freinage dont la valeur est comprise dans la plage correspondant au coude de la courbe caractéristique couple résiduel/jeu du piston, par exemple une valeur de 0,25 Nm, il est possible d'obtenir, par différence avec la position angulaire déterminée précédemment, la troisième valeur d'angle de rotation Δθ₂ et d'enregistrer cette troisième valeur dans la mémoire du calculateur associé à l'étrier électromécanique.

En se reportant à nouveau à la figure 3, on a indiqué par t le temps total pour faire passer le moteur électrique de la position angulaire de référence θ_{f0} à la seconde position cible θ_{cible 2}. Ce temps t est inférieur à un temps minimal correspondant au temps le plus court possible entre le moment où un conducteur relâche la pédale de frein et le moment où le conducteur appuie à nouveau sur la pédale de frein. De préférence, le temps t est inférieur à 0,5 seconde. Sur la figure 3, on a également indiqué la durée t' pendant laquelle le rotor du moteur est maintenu dans la première position cible θ_{cible 1}. Cette durée t' est suffisante pour permettre une mise à jour des paramètres de fonctionnement du système de freinage et a, par exemple, une valeur de 300 ms.

Lorsqu'on utilise à titre de détecteur de force 33 un capteur tel qu'un capteur à effet Hall ou d'autres capteurs éventuellement associés à un amplificateur opérationnel, il est fréquent que le capteur fournisse une tension de sortie non nulle même si le capteur n'est soumis à aucune force. C'est ce que les hommes de l'art appellent la tension de décalage ou "offset". Cette tension de décalage fausse la mesure de la force de serrage.

Etant donné que la position de référence θ_{f0} est déterminée comme étant la valeur de la position angulaire instantanée du rotor du moteur quand la force de serrage a une valeur prédéfinie F₀, on conçoit aisément que la tension de décalage susmentionnée puisse fausser aussi la détermination de la position de référence θ_{f0}. Il convient donc de corriger la tension de sortie du capteur de force en y retranchant la tension de décalage, afin d'obtenir la valeur correcte de la force de serrage. La tension de décalage susmentionnée peut varier dans le temps à cause des conditions environnementales ou à cause du vieillissement du capteur de force. La durée t' pendant laquelle le rotor du moteur électrique de l'étrier électromécanique est maintenu dans la première position cible θ_{cible 1} et pendant laquelle l'étrier électromécanique n'applique aucune force de serrage aux deux plaquettes 6 et 7, peut être mise à profit pour mesurer et mettre en mémoire la tension de décalage afin de permettre ainsi une correction dynamique de la tension de décalage et, par suite, une correction appropriée de la mesure de la force de serrage chaque fois que cela est nécessaire, en particulier lors de la détermination de la position de référence θ_{f0}.

En se reportant maintenant à la figure 6, on peut voir un organigramme représentant un algorithme utilisable dans le système de freinage de l'invention pour ramener à chaque cycle de serrage/desserrage le rotor du moteur électrique de l'étrier électromécanique dans une position de repos ou d'attente d'un nouveau cycle de serrage/desserrage. Dans l'étape S1, le programme contenu dans la mémoire du calculateur associé à l'étrier électromécanique, par exemple le calculateur 38a associé à l'étrier électromécanique 3a de la figure 1, effectue un premier test (test 1) pour vérifier si une requête de serrage a été émise par le calculateur central 40, par exemple en réponse à l'enfoncement de la pédale de frein par le conducteur ou en réponse à une requête émise par le système d'antiblocage de roue (ABS) ou par le système de contrôle dynamique de stabilité (ESP) du véhicule.

En cas de succès du premier test, le programme passe ensuite à l'étape S2 au cours de laquelle le programme effectue un second test (test 2) consistant à vérifier si les conditions pour autoriser le calcul de la position de contact sont satisfaites, en particulier si la force de serrage a actuellement une valeur non nulle et si, dans le cas où la détermination de la position de référence θ_{f0} doit être effectuée au cours de la phase de desserrage du frein, on se trouve effectivement dans une phase de desserrage (force de serrage décroissante). Si ces conditions ne sont pas vérifiées, le programme revient à l'étape S1 et le premier et le second test sont recommencés périodiquement autant de fois que cela est nécessaire, comme indiqué par la boucle B1, jusqu'à ce que les conditions susmentionnées soient vérifiées.

Ensuite, le programme passe à l'étape S3 au cours de laquelle il vérifie si la force de serrage F est égale à une valeur prédéterminée F₀, par exemple 60 DaN. Si cette condition n'est pas vérifiée, le programme revient à l'étape S1 et les vérifications sus-indiquées sont recommencées autant de fois que cela est nécessaire, comme indiqué par la boucle B2.

Quand F = F₀, le programme passe ensuite à l'étape S4 au cours de laquelle il détermine la position de référence θ_{f0}, c'est-à-dire la position angulaire instantanée du rotor du moteur fournie par le capteur angulaire 31 au moment où le capteur de force 33 indique que la force de serrage est égale à F₀. Au cours de cette même étape S4, le calculateur 38a calcule les positions cible θ_{cible 1} et θ_{cible 2} à partir de la position de référence θ_{f0} qui vient d'être déterminée et des valeurs Δθ₀, Δθ₁ et Δθ₂ contenues dans sa mémoire. Les valeurs des positions cible θ_{cible 1} et θ_{cible 2} ainsi calculées sont mémorisées dans la mémoire du calculateur 38a (dans le cas où la mémoire du calculateur contenait déjà des valeurs des positions cible, les valeurs des nouvelles positions cible θ_{cible 1} et θ_{cible 2} sont mises à jour dans la mémoire).

Ensuite, comme indiqué par la boucle B3, le programme revient à l'étape S1 au cours de laquelle le calculateur 38a refait à nouveau le test 1 aussi longtemps que la requête de serrage émise par le calculateur central 40 est présente. Quand la requête de serrage cesse, le programme passe à l'étape S5 dans laquelle le calculateur 38a adopte comme valeurs de la première et de la seconde position cible les valeurs de θ_{cible 1} et θ_{cible 2} calculées et mémorisées en dernier lieu dans la mémoire du calculateur 38a au cours de l'étape S4.

Ensuite, le programme passe à l'étape S6 au cours de laquelle le calculateur 38a commande le moteur 10 de l'étrier électromécanique de façon à positionner son rotor dans la position cible θ_{cible 1}.

Ensuite, le programme passe à l'étape S7 au cours de laquelle le calculateur 38a mesure la tension de décalage du capteur de force 33 et effectue la correction dynamique de cette tension de décalage.

Ensuite, le programme passe à l'étape S8 au cours de laquelle le calculateur 38a commande le moteur 10 de l'étrier électromécanique de façon à positionner le rotor de celui-ci dans la seconde position cible θ_{cible 2}.

Ensuite, le programme revient à l'étape S1, connne indiqué par la boucle B4, en attente d'une nouvelle requête de serrage du frein.

Il va de soi que le mode de réalisation qui a été décrit ci-dessus a été donné à titre d'exemple purement indicatif et nullement limitatif, et que de nombreuses variantes pourraient être imaginées par l'homme de l'art sans pour autant sortir du cadre de l'invention. Par exemple, pour la mise en oeuvre de l'invention, il n'est pas nécessaire que le détecteur de force 33 soit un capteur de force donnant une mesure quantitative de la force de serrage. A la place d'un capteur de force, on peut très bien utiliser un commutateur fonctionnant en tout ou rien, taré de telle sorte que ses contacts se ferment (ou s'ouvrent) lorsque le commutateur est soumis à une force de serrage prédéfinie F₀, ou encore tout autre dispositif de détection de force ou de contact équivalent apte à fournir un signal de contact lorsqu'un contact franc est établi (ou rompu) entre le disque 4 et les plaquettes de frein 6 et 7. Dans ce cas, le détecteur de force ou de contact ne présente pas de tension de décalage et l'étape de mise à jour et de correction dynamique de la tension de décalage peut être supprimée, de sorte que la durée t' pendant laquelle le rotor du moteur électrique est maintenu dans la première position cible θ_{cible 1} peut être substantiellement raccourcie.

En outre, comme dans ce dernier cas, on n'a pas besoin de mesurer une tension de décalage (ou bien dans le cas d'un système simplifié dans lequel la tension de décalage n'est pas mesurée et mise à jour), il n'est pas absolument indispensable que la première position cible θ_{cible 1} soit telle que l'étrier n'exerce à coup sûr aucune force de serrage sur les plaquettes de frein 6 et 7. Autrement dit, la seconde valeur d'angle Δθ₁ peut être seulement légèrement plus grande que la troisième valeur d'angle Δθ₂.

## Revendications

1. Procédé pour commander un étrier électromécanique 3 pour un système de frein à disque d'un véhicule, ledit étrier comportant deux plaquettes de frein (6 et 7) placées respectivement de part et d'autre d'un disque de frein (4) lié à une roue du véhicule, un moteur électrique rotatif (10), un capteur de position angulaire (31) apte à mesurer un angle instantané de rotation dudit moteur électrique, un mécanisme (15, 20) de réduction de vitesse et de conversion relié fonctionnellement d'une part au moteur électrique (10) et d'autre part à un piston (29) portant une (7) des deux plaquettes de frein (6 et 7), ledit mécanisme (15, 20) étant apte à convertir le mouvement de rotation du moteur électrique (10) en un mouvement de translation dudit piston (29) et de la plaquette de frein (7) y associée vers ou à l'écart du disque de frein (4) selon le sens de rotation du moteur électrique, et des moyens de détection de force (33) aptes à détecter au moins une valeur de force de serrage exercée par ledit étrier électromécanique (3) sur lesdites plaquettes de frein (6 et 7), **caractérisé en ce qu'**il comprend les étapes consistant :
a) à déterminer une position de contact plaquettes/disque de frein ;
b) à chaque phase de desserrage du frein à disque :
b1) à commander le moteur électrique (10) de façon à faire reculer le piston (29) à l'écart du disque de frein (4) jusqu'à une première position cible (θ_{cible 1}) écartée de la position de contact déterminée à l'étape a) d'une première quantité prédéfinie telle que ledit étrier électromécanique (3) n'exerce sensiblement aucune force de serrage sur lesdites plaquettes de frein (6 et 7) ;
b2) à commander ensuite le moteur électrique (10) de façon à faire avancer le piston (29) à partir de la première position cible vers le disque de frein (4) jusqu'à une seconde position cible (θ_{cible 2}) écartée de ladite position de contact déterminée à l'étape a) d'une seconde quantité prédéfinie, plus petite que ladite première quantité prédéfinie, ladite seconde position cible étant une position d'attente pour un cycle suivant de serrage/desserrage du frein à disque, ladite seconde quantité prédéfinie étant choisie de façon à obtenir un couple résiduel de freinage minimal à la fin de la phase de desserrage en cours et un temps de réponse minimal du frein à disque pour le cycle suivant de serrage/desserrage.

2. Procédé selon la revendication 1, **caractérisé en ce que**, dans l'étape a), la détermination de la position de contact est effectuée à partir des signaux de sortie fournis par le capteur de position angulaire (31) et par les moyens de détection de force (33).

3. Procédé selon la revendication 2, **caractérisé en ce que** ladite position de contact est déterminée comme étant la valeur mesurée de l'angle instantané de rotation(θ_{f0}) fournie par le capteur de position angulaire (31) quand la force de serrage détectée par lesdits moyens de détection (33) a une valeur prédéfinie (F₀).

4. Procédé selon la revendication 3, **caractérisé en ce que** ladite première quantité prédéfinie est la somme d'une première valeur d'angle de rotation (Δθ₀) qui est obtenue par extrapolation de la courbe caractéristique force de serrage/position angulaire du moteur de l'étrier électromécanique (3) et qui donne une force de serrage sensiblement nulle, et d'une seconde valeur d'angle de rotation (Δθ₁) qui, additionnée à ladite première valeur d'angle de rotation, donne de façon certaine une force de serrage nulle.

5. Procédé selon la revendication 4, **caractérisé en ce que** ladite seconde quantité prédéfinie est la somme de ladite première valeur d'angle de rotation (Δθ₀) et d'une troisième valeur d'angle de rotation (Δθ₂), plus petite que la seconde valeur d'angle de rotation (Δθ₁) et choisie de façon à obtenir un couple résiduel de freinage dont la valeur est comprise dans une plage correspondant à un coude de la caractéristique couple résiduel/jeu du piston de l'étrier électromécanique (3).

6. Procédé selon l'une quelconque des revendications 1 à 5, **caractérisé en ce que** l'étape a) est effectuée à chaque phase de desserrage du frein à disque.

7. Procédé selon l'une quelconque des revendications 1 à 6, **caractérisé en ce que** l'étape b) est effectuée dans un temps t inférieur à un temps minimal entre relâchement de la pédale de frein et appui suivant sur la pédale de frein.

8. Procédé selon la revendication 7, **caractérisé en ce que** le temps t est inférieur à 0,5 s.

9. Procédé selon l'une quelconque des revendications 1 à 8, **caractérisé en ce que**, après l'étape b1) et avant l'étape b2), on maintient le moteur électrique (10) dans la première position cible pendant une durée t' suffisante pour permettre une mise à jour de paramètres de fonctionnement du système de freinage.

10. Procédé selon la revendication 9, **caractérisé en ce que** la durée t' est d'environ 300 ms.

11. Système de frein à disque pour un véhicule, comprenant un disque de frein (4), un étrier électromécanique (3) et un calculateur (38) programmé pour contrôler et commander le fonctionnement de l'étrier électromécanique, ce dernier comportant deux plaquettes de frein (6 et 7), placées respectivement de part et d'autre du disque de frein (4) lié à une roue du véhicule, un moteur électrique rotatif (10), un capteur de position angulaire (31) apte à mesurer un angle instantané de rotation dudit moteur électrique, un mécanisme (15, 20) de réduction de vitesse et de conversion relié fonctionnellement d'une part au moteur électrique (10) et d'autre part à un piston (29) portant une (7) des deux plaquettes de frein (6 et 7), ledit mécanisme (15, 20) étant apte à convertir le mouvement de rotation du moteur électrique (10) en un mouvement de translation dudit piston (29) et de la plaquette de frein (7) y associée vers ou à l'écart du disque de frein (4) selon le sens de rotation du moteur électrique, et des moyens de détection de force (33) aptes à détecter au moins une valeur de force de serrage exercée par ledit étrier électromécanique (3) sur lesdites plaquettes de frein (6 et 7), **caractérisé en ce que** ledit calculateur programmé comprend :
a) des moyens pour déterminer une position de contact plaquettes/disque de frein ; et
b) des moyens pour commander le moteur électrique (10) de façon à faire reculer le piston (29) à l'écart du disque de frein (4) jusqu'à une première position cible (θ_{cible 1}) écartée de ladite position de contact d'une première quantité prédéfinie telle que ledit étrier électromécanique (3) n'exerce sensiblement aucune force de serrage sur lesdites plaquettes de frein (6 et 7), et pour commander ensuite le moteur électrique (10) de façon à faire avancer le piston (29) à partir de la première position cible vers le disque de frein (4) jusqu'à une seconde position cible (θ_{cible 2}) écartée de ladite position de contact d'une seconde quantité prédéfinie, plus petite que ladite première quantité prédéfinie, ladite seconde position cible étant une position d'attente pour un cycle suivant de serrage/desserrage du frein à disque, ladite seconde quantité prédéfinie étant choisie de façon à obtenir un couple résiduel de freinage minimal pour la phase de desserrage en cours et un temps de réponse minimal du frein à disque pour le cycle suivant de serrage/desserrage.

## Claims

1. Method of controlling an electromechanical calliper (3) for a disk brake system of a vehicle, said calliper comprising two brake pads (6 and 7) respectively placed either side of a brake disk (4) linked to a wheel of the vehicle, a rotating electric motor (10), an angular position sensor (31) designed to measure an instantaneous angle of rotation of said electric motor, a speed reduction and conversion mechanism (15, 20) functionally linked on the one hand to the electric motor (10) and on the other hand to a piston (29) bearing one (7) of the two brake pads (6 and 7), said mechanism (15, 20) being designed to convert the rotation movement of the electric motor (10) into a thrust movement of said piston (29) and of the brake pad (7) associated with it towards or away from the brake disk (4) according to the direction of rotation of the electric motor, and force detection means (33) designed to detect at least one clamping force value exerted by said electromechanical calliper (3) on said brake pads (6 and 7), **characterized in that** it comprises steps consisting in:
a) determining a brake pad/disk contact position;
b) in each disk brake unclamping phase:
b1) controlling the electric motor (10) so as to retract the piston (29) away from the brake disk (4) to a first target position (θ_{target 1}) away from the contact position determined in the step a) by a first predefined quantity such that said electromechanical calliper (3) exerts substantially no clamping force on said brake pads (6 and 7);
b2) then controlling the electric motor (10) so as to advance the piston (29) from the first target position towards the brake disk (4) to a second target position (θ_{target 2}) away from said contact position determined in the step a) by a second predefined quantity, smaller than said first predefined quantity, said second target position being a waiting position pending a subsequent clamping/unclamping cycle of the disk brake, said second predefined quantity being chosen in such a way as to obtain a minimal residual braking torque at the end of the current unclamping phase and a minimal response time of the disk brake for the next clamping/unclamping cycle.

2. Method according to Claim 1, **characterized in that**, in the step a), the contact position is determined from output signals supplied by the angular position sensor (31) and by the force detection means (33).

3. Method according to Claim 2, **characterized in that** said contact position is determined as being the measured value of the instantaneous rotation angle (θ_{f0}) supplied by the angular position sensor (31) when the clamping force detected by said detection means (33) has a predefined value (F₀).

4. Method according to Claim 3, **characterized in that** said first predefined quantity is the sum of a first rotation angle value (Δθ₀) which is obtained by extrapolating the characteristic clamping force/angular position curve of the motor of the electromechanical calliper (3) and which gives a substantially zero clamping force, and a second rotation angle value (Δθ₁) which, when added to said first rotation angle value, definitely gives a zero clamping force.

5. Method according to Claim 4, **characterized in that** said second predefined quantity is the sum of said first rotation angle value (Δθ₀) and a third rotation angle value (Δθ₂), smaller than the second rotation angle value (Δθ₁) and chosen so as to obtain a residual braking torque, the value of which is within a range corresponding to a bend of the residual torque/play characteristic of the piston of the electromechanical calliper (3).

6. Method according to any one of Claims 1 to 5, **characterized in that** the step a) is performed on each unclamping phase of the disk brake.

7. Method according to any one of Claims 1 to 6, **characterized in that** the step b) is performed in a time t less than a minimal time between the releasing of the brake pedal and the next press on the brake pedal.

8. Method according to Claim 7, **characterized in that** the time t is less than 0.5 s.

9. Method according to any one of Claims 1 to 8, **characterized in that**, after the step b1), and before the step b2), the electric motor (10) is maintained in the first target position for a time t' that is sufficient to allow the operating parameters of the braking system to be updated.

10. Method according to Claim 9, **characterized in that** the time t' is approximately 300 ms.

11. Disk brake system for a vehicle, comprising a brake disk (4), an electromechanical calliper (3) and a computer (38) programmed to monitor and control the operation of the electromechanical calliper, the latter comprising two brake pads (6 and 7) placed respectively either side of the brake disk (4) linked to a wheel of the vehicle, a rotating electric motor (10), an angular position sensor (31) designed to measure an instantaneous angle of rotation of said electric motor, a speed reduction and conversion mechanism (15, 20) functionally linked on the one hand to the electric motor (10) and on the other hand to a piston (29) bearing one (7) of the two brake pads (6 and 7), said mechanism (15, 20) being designed to convert the rotation movement of the electric motor (10) into a thrust movement of said piston (29) and of the brake pad (7) associated with it towards or away from the brake disk (4) according to the direction of rotation of the electric motor, and force detection means (33) designed to detect at least one clamping force value exerted by said electromechanical calliper (3) on said brake pads (6 and 7), **characterized in that** said programmed computer comprises:
a) means for determining a brake pad/disk contact position; and
b) means for controlling the electric motor (10) so as to retract the piston (29) away from the brake disk (4) to a first target position (θ_{target 1}) away from said contact position by a first predefined quantity such that said electromechanical calliper (3) exerts substantially no clamping force on said brake pads (6 and 7) and to then control the electric motor (10) so as to advance the piston (29) from the first target position towards the brake disk (4) to a second target position (θ_{target 2}) away from said contact position by a second predefined quantity, smaller than said first predefined quantity, said second target position being a waiting position pending a subsequent clamping/unclamping cycle of the disk brake, said second predefined quantity being chosen so as to obtain a minimal residual braking torque for the current unclamping phase and a minimal response time of the disk brake for the next clamping/unclamping cycle.

## Patentansprüche

1. Verfahren zur Steuerung eines elektromechanischen Bremssattels (3) für ein Scheibenbremssystem eines Fahrzeugs, wobei der Bremssattel zwei Bremsklötze (6 und 7), die auf beiden Seiten einer Bremsscheibe (4) angeordnet sind, welche mit einem Rad des Fahrzeugs verbunden ist, einen elektrischen Drehmotor (10), einen Winkelpositionssensor (31), der einen momentanen Drehwinkel des Elektromotors messen kann, einen Mechanismus (15, 20) zur Geschwindigkeitsverringerung und zur Umwandlung, der funktionell einerseits mit dem Elektromotor (10) und andererseits mit einem Kolben (29), der einen (7) der beiden Bremsklötze (6 und 7) trägt, verbunden ist, wobei der Mechanismus (15, 20) so ausgelegt ist, dass die Drehbewegung des Elektromotors (10) in eine Translationsbewegung des Kolbens (29) und des mit diesem verbundenen Bremsklotzes (7), je nach Drehrichtung des Elektromotors, in Richtung der Bremsscheibe (4) oder von dieser weg umgewandelt wird, und Kraftaufnehmermittel (33) aufweist, die in der Lage sind, wenigstens einen Wert der von dem elektromechanischen Bremssattel (3) auf die Bremsklötze (6 und 7) ausgeübten Kraft zu detektieren, **dadurch gekennzeichnet, dass** es die Schritte umfasst, bestehend aus:
a) Bestimmen einer Kontaktposition Bremsklötze/Bremsscheibe;
b) in jeder Phase des Lösens der Bremsscheibe:
b1) Steuern des Elektromotors (10) so, dass der Kolben (29) von der Bremsscheibe (4) weg bis in eine erste Zielposition (θ_{cible 1}) zurückgestellt wird, die von der im Schritt a) bestimmten Kontaktposition um eine erste vorgegebene Größe derart beabstandet ist, dass der elektromechanische Bremssattel (3) praktisch keine Klemmkraft auf die Bremsklötze (6 und 7) ausübt;
b2) anschließendes Steuern den Elektromotor (10) so , dass der Kolben (29) ausgehend von der ersten Zielposition in Richtung Bremsscheibe (4) bis zu einer zweiten Zielposition (θ_{cible 2}), vorgestellt wird, die von der im Schritt a) bestimmten Kontaktposition um eine zweite vorgegebene Größe beabstandet ist, welche kleiner als die erste vorgegebene Größe ist, wobei die zweite Zielposition eine Warteposition für einen anschließenden Klemm-/Freigabezyklus der Scheibenbremse darstellt, wobei die zweite vorgegebene Größe so gewählt ist, dass man am Ende der laufenden Freigabephase ein minimales Restbremsmoment und für den anschließenden Klemm-/Freigabezyklus eine minimale Antwortzeit der Scheibenbremse erhält.

2. Verfahren gemäß Anspruch 1, **dadurch gekennzeichnet, dass** die Bestimmung der Kontaktposition im Schritt a) mittels Ausgangssignalen durchgeführt wird, die von dem Winkelpositionssensor (31) und den Kraftaufnahmemitteln (33) stammen.

3. Verfahren gemäß Anspruch 2, **dadurch gekennzeichnet, dass** die Kontaktposition als der Wert des gemessenen momentanen Drehwinkels (θ_{f0}), bestimmt wird, der von dem Winkelpositionssensor (31) geliefert wird, wenn die von den Aufnehmermitteln (33) detektierte Klemmkraft einen vorgegebenen Wert (F₀) erreicht.

4. Verfahren gemäß Anspruch 3, **dadurch gekennzeichnet, dass** die erste vorgegebene Größe die Summe eines ersten Werts des Drehwinkels (Δθ₀), den man durch Extrapolation der charakteristischen Kiemmkraft/Winkelpositions-Kurve des Motors des elektromechanischen Bremssattels (3) erhält und der eine im Wesentlichen verschwindende Klemmkraft liefert, und eines zweiten Werts des Drehwinkels (Δθ₁), der, hinzugefügt zum ersten Wert des Drehwinkels, in gesicherter Weise eine verschwindende Klemmkraft liefert.

5. Verfahren gemäß Anspruch 4, **dadurch gekennzeichnet, dass** die zweite vorgegebene Größe die Summe des ersten Werts des Drehwinkels (Δθ₀) und eines dritten Werts des Drehwinkels (Δθ₂) ist, der kleiner als der zweite Wert des Drehwinkels (Δθ₁) ist und so gewählt wird, dass man ein Restbremsmoment erhält, dessen Wert in einem Bereich liegt, der einem Bogen der Restmoment/Kolbenspiel-Kurve des elektromechanischen Bremssattels (3) entspricht.

6. Verfahren gemäß einem der Ansprüche 1 bis 5, **dadurch gekennzeichnet, dass** der Schritt a) in jeder Phase des Lösens der Scheibenbremse durchgeführt wird.

7. Verfahren gemäß einem der Ansprüche 1 bis 6, **dadurch gekennzeichnet, dass** der Schritt b) in einer Zeit t durchgeführt wird, die kürzer als eine minimale Zeit zwischen dem Loslassen des Bremspedals und dem darauffolgenden Drücken des Bremspedals ist.

8. Verfahren gemäß Anspruch 7, **dadurch gekennzeichnet, dass** die Zeit t weniger als 0,5 s beträgt.

9. Verfahren gemäß einem der Ansprüche 1 bis 8, **dadurch gekennzeichnet, dass** man nach dem Schritt b1) und vor dem Schritt b2) den Elektromotor (10) während eines Zeitraums t', der ausreicht, um eine Aktualisierung der Funktionsparameter des Bremssystems zu ermöglichen, in einer ersten Zielposition hält.

10. Verfahren gemäß Anspruch 9, **dadurch gekennzeichnet, dass** der Zeitraum t' etwa 300 ms beträgt.

11. Scheibenbremssystem für ein Fahrzeug mit einer Bremsscheibe (4), einem elektromechanischen Bremssattel (3) und einem Rechner (38), der programmiert ist, die Funktion des elektromechanischen Bremssattels zu kontrollieren und zu steuern, wobei letzterer zwei Bremsklötze (6 und 7), die jeweils auf beiden Seiten der mit einem Rad des Fahrzeugs verbundenen Bremsscheibe (4) angeordnet sind, einen elektrischen Drehmotor (10), einen Winkelpositionssensor (31) der einen momentanen Drehwinkel des Elektromotors messen kann, einen Mechanismus (15, 20) zur Geschwindigkeitsreduktion und Umwandlung, der funktionell einerseits mit dem Elektromotor (10) und andererseits mit einem Kolben (29), der einen (7) der beiden Bremsklötze (6 und 7) trägt, verbunden ist, wobei der Mechanismus (15, 20) so ausgelegt ist, dass die Drehbewegung des Elektromotors (10) in eine Translationsbewegung des Kolbens (29) und des mit ihm verbundenen Bremsklotzes (7), je nach Drehrichtung des Elektromotors, in Richtung der Bremsscheibe (4) oder von ihr weg umgewandelt wird, und Kraftaufnehmermittel (33) aufweist, die in der Lage sind, wenigstens einen Wert der von dem elektromechanischen Bremssattel (3) auf die Bremsklötze (6 und 7) ausgeübten Klemmkraft zu detektieren, **dadurch gekennzeichnet, dass** der programmierte Rechner umfasst:
a) Mittel zur Bestimmung einer Kontaktposition Bremsklötze/Bremsscheibe; und
b) Mittel zur derartigen Steuerung des Elektromotors (10), dass der Kolben (29) von der Bremsscheibe (4) weg bis in eine erste Zielposition (θ_{cible 1}) zurückgestellt wird, die von der im Schritt a) bestimmten Kontaktposition um eine erste vorgegebene Größe derart beabstandet ist, dass der elektromechanische Bremssattel (3) praktisch keine Klemmkraft auf die Bremsklötze (6 und 7) ausübt, und zur anschließenden derartigen Steuerung des Elektromotors (10), dass der Kolben (29) ausgehend von der ersten Zielposition in Richtung Bremsscheibe (4) bis zu einer zweiten Zielposition (θ_{cible 2}), vorgestellt wird, die von der im Schritt a) bestimmten Kontaktposition um eine zweite vorgegebene Größe beabstandet ist, welche kleiner als die erste vorgegebene Größe ist, wobei die zweite Zielposition eine Warteposition für einen anschließenden Klemm-/Freigabezyklus der Scheibenbremse darstellt, wobei die zweite vorgegebene Größe so gewählt ist, dass man am Ende der laufenden Freigabephase ein minimales Restbremsmoment und für den anschließenden Klemm-/Freigabezyklus eine minimale Antwortzeit der Scheibenbremse erhält.
